# EUROPÄISCHE PATENTSCHRIFT

(11) **EP 1 412 626 B1**
(45) Veröffentlichungstag und Bekanntmachung des Hinweises auf die Patenterteilung: **08.12.2004**
(21) Anmeldenummer: 02750629.4
(22) Anmeldetag: 01.08.2002
(51) Int. Cl.: F02B 31/08

(54) **BRENNKRAFTMASCHINE MIT ZUMINDEST ZWEI EINLASSVENTILEN PRO ZYLINDER**
INTERNAL COMBUSTION ENGINE COMPRISING AT LEAST TWO INLET VALVES PER CYLINDER
MOTEUR A COMBUSTION INTERNE AYANT AU MOINS DEUX SOUPAPES D'ADMISSION PAR CYLINDRE

(30) Priorität: 02.08.2001 AT 6112001 U
(43) Veröffentlichungstag der Anmeldung: 28.04.2004
(73) Patentinhaber: AVL List GmbH, 8020 Graz (AT)
(72) Erfinder: LAIMBÖCK, Franz, A-8051 THAL (AT)
(74) Vertreter: Babeluk, Michael, Dipl.-Ing.
(86) Internationale Anmeldenummer: PCT/AT2002/000231
(87) Internationale Veröffentlichungsnummer: WO 2003/012268

(56) Entgegenhaltungen:
- EP-A- 0 764 773
- AT-B- 402 535
- AT-U- 2 434
- AT-U- 3 138
- DE-A- 3 836 550
- US-A- 4 548 175
- US-A- 4 719 886
- PATENT ABSTRACTS OF JAPAN vol. 009, no. 100 (M-376), 2. Mai 1985 (1985-05-02) & JP 59 224466 A (TOYOTA JIDOSHA KK), 17. Dezember 1984 (1984-12-17)
- PATENT ABSTRACTS OF JAPAN vol. 009, no. 307 (M-435), 4. Dezember 1985 (1985-12-04) & JP 60 142053 A (TOYOTA JIDOSHA KK), 27. Juli 1985 (1985-07-27)
- PATENT ABSTRACTS OF JAPAN vol. 018, no. 212 (M-1593), 15. April 1994 (1994-04-15) & JP 06 010803 A (NISSAN MOTOR CO LTD), 21. Januar 1994 (1994-01-21) in der Anmeldung erwähnt
- PATENT ABSTRACTS OF JAPAN vol. 018, no. 374 (M-1638), 14. Juli 1994 (1994-07-14) & JP 06 101602 A (NISSAN MOTOR CO LTD), 12. April 1994 (1994-04-12) in der Anmeldung erwähnt

## Beschreibung

Die Erfindung betrifft eine Brennkraftmaschine mit zumindest zwei Einlassventilen pro Zylinder, mit mindestens zwei zu den Einlassventilen führenden Einlasskanälen, von welchen ein erster Einlasskanal vorzugsweise als ungedrosselter Tangentiaikanal ausgeführt ist und der Durchfluss durch einen zweiten Einlasskanal mittels einer in Abhängigkeit von zumindest einem Motorparameter betätigbaren ersten Drosseleinrichtung steuerbar ist, mit zumindest einer Kraftstoff in zumindest zwei Einlasskanäle einspritzenden Kraftstoffeinspritzeinrichtung pro Zylinder, wobei im geschlossenen Zustand der ersten Drosseleinrichtung mittels zumindest einer Leckageöffnung der ersten Drosseleinrichtung ein definierter Mindestdurchfluss durch den zweiten Einlasskanal erzeugbar ist, und wobei die erste Drosseleinrichtung stromabwärts der Kraftstoffeinspritzeinrichtung angeordnet ist und mindestens eine Leckageöffnung im Auftreffbereich mindestens eines Einspritzstrahles angeordnet ist, und wobei die erste Drosseleinrichtung in geschlossenem Zustand mit einer Kanaltrennwand zwischen dem ersten und dem zweiten Einlasskanal einen stumpfen Winkel größer als 90° einschließt, so dass die Frischgasströmung zum ersten Einlasskanal umgeleitet wird.

Aus der AT 402 535 B ist eine Brennkraftmaschine, bei der der Kraftstoff über ein Einspritzventil durch eine Öffnung in der Kanaltrennwand zwischen zwei benachbarten Einlasskanälen hindurch eingespritzt wird, bekannt. Durch die Öffnung zwischen den beiden benachbarten Einlasskanälen kann allerdings eine Querströmung stattfinden, die zum Verblasen des Einspritzstrahles, führt, insbesondere wenn eine Abgasrückführung oder Zuführung von Zusatzluft in den Tangentialkanal erfolgt. Im Extremfall wird der Kraftstoffstrahl, der für den Tangentialkanal bestimmt ist, durch die Öffnung in den als Neutralkanal ausgebildeten zweiten Einlasskanal eingespritzt.

Um dies zu verhindern, wird in der AT 2434 U1 vorgeschlagen, dass die Drosseleinrichtung im geschlossenen Zustand einen definierten Mindestdurchfluss zwischen 5% und etwa 20% erzeugt. Dadurch soll erreicht werde, dass der Kraftstoffstrahl des Tangentialkanals auch in diesem verbleibt und beide Einspritzstrahlen die Wände der Einlasskanäle mit Kraftstoff nicht benetzen.

Aus der EP 0 764 773 A1 ist es bekannt, im Neutralkanal eine Drosseleinrichtung vorzusehen, welche im geschlossenen Zustand einen definierten Mindestdurchfluss erzeugt, um eine stabile radiale Gemischschichtung zu realisieren, deren Ausprägung mit der Motorlast variiert werden kann. Durch die definierte Leckageöffnung kann allerdings das Verblasen des Kraftstoffstrahles und der damit entstehende Wandbenetzungseffekt an der Außenwand des Neutralkanals nicht völlig vermieden werden, was sich nachteilig auf die Kohlenwasserstoffemissionen auswirkt.

Weiters wird in der AT 3138 U1 bei einer Brennkraftmaschine mit zwei Einlasskanälen vorgeschlagen, dass im Bereich der Kanaltrennwand zwischen den beiden Einlasskanälen zwischen der Drosseleinrichtung und einer definierten Öffnung in der Kanaltrennwand ein durch Strömungsleitflächen gebildeter Leckageströmungsweg für den Mindestdurchfluss vorgesehen ist. Zur Ausbildung der Strömungsleitflächen wird in den zweiten Einlasskanal eine durch ein Leitblech gebildete Leiteinrichtung eingesetzt. Dies erhöht allerdings den Herstellungsaufwand.

Die JP 06-010803 A offenbart eine Brennkraftmaschine mit zwei Einlasskanälen, welche von einem gemeinsamen Zulaufkanal ausgehen. Im Zulaufkanal ist stromabwärts einer Kraftsteinspritzeinrichtung ein Drallregelventil angeordnet. Das Drallregelventil weist im Bereich eines Einlasskanals eine Leckageöffnung auf, so dass im geschlossenen Zustand Ansaugluft in den Einlasskanal gelangt. Durch die Leckageöffnung kann auch ein Kraftstoffstrahl in den einen Einlasskanal eingespritzt werden. Im Bereich des anderen Einspritzkanals weist das Drallregelventil eine Spritzöffnung auf, durch welche ein gerichteter Kraftstoffstrahl auch in den anderen Einlasskanal gelangt. Die JP 06-101602 A zeigt eine ähnliche Brennkraftmaschine, bei der durch ein Drallregelventil ein Zulaufkanal zu zwei Einlassöffnungen halbseitig geschlossen wird. Die Mündung der Einspritzeinrichtung ist im Bereich des Drallregelventils angeordnet. Mittels eines verlängerten Einspritzrohres wird Kraftstoff der durch das Drallregelventil versperrten Hälfte des Zulaufkanals zugeführt. Auch diese Anordnungen sind relativ aufwendig und verbinden nicht zuverlässig das Verblasen des Kraftstoffstrahles. Zudem treten die geschlossenem Drallregelventil hohe Strömungsverluste auf.

Die JP 59-224466 A offenbart eine Brennkraftmaschine mit zwei Einlassventilen pro Zylinder, wobei zu jedem der Einlassventile ein Einlasskanal führt. Der Durchfluss des einen Einlasskanals ist mittels einer Drosseleinrichtung steuerbar. Die Drosseleinrichtung ist stromabwärts einer in beide Einlasskanäle Kraftstoff einspritzenden Kraftstoffeinspritzeinrichtung angeordnet. Die Drosseleinrichtung weist einen Querschnitt auf, der kleiner ist als der Durchflussquerschnitt des entsprechenden Einlasskanals in diesem Bereich, wodurch auch bei geschlossener Drosseleinrichtung ein Mindestdurchfluss erzeugt wird. Der Einspritzstrahl ist auf einen freien Raum zwischen Drosseleinrichtung und Kanaltrennwand gerichtet, so dass der Einspritzstrahl - ohne auf die Drosseleinrichtung aufzutreffen - direkt in Richtung der Einlassöffnungen eingespritzt wird. Da die Drosseleinrichtung auch im geschlossenen Zustand deutlich von der Kanaltrennwand beabstandet ist, ist der Effekt der Umleitung der Strömung zum ersten Einlasskanal relativ gering.

Ein Benetzen der Kanalwand durch Verblasen des Kraftstoffstrahles kann nicht ausgeschlossen werden.

Aufgabe der Erfindung ist es, unter Vermeidung der genannten Nachteile bei einer Brennkraftmaschine der eingangs genannten Art die Emissionen zu verbessern.

Erfindungsgemäß erfolgt dies dadurch, dass der erste und der zweite Einlasskanal von einem gemeinsamen Sammelkanal ausgehen und dass die erste Drosseleinrichtung im Bereich der Verzweigung der beiden Einlasskanäle aus dem Sammelkanal, vorzugsweise unmittelbar stromaufwärts der Verzweigung angeordnet ist. Dadurch, dass die geschlossene Drosselklappe mit der Kanalwand einen Winkel >90° einschließt, können Strömungsverluste sehr klein gehalten werden. Vorzugsweise ist dabei vorgesehen, dass die Leckageöffnung durch mindestens eine Bohrung in der ersten Drosseleinrichtung gebildet ist.

Der Kraftstoff wird durch die Leckageöffnungen der ersten Drosseleinrichtung hindurch in den zweiten Einlasskanal eingespritzt. Stromabwärts der ersten Drosseleinrichtung sind erster und zweiter Einlasskanal völlig getrennt ausgeführt. Eine den Kraftstoffstrahl ablenkende Querströmung kann somit stromabwärts der ersten Drosseleinrichtung ausgeschlossen werden. Für die Zuführung des Kraftstoffes in den zweiten Einlasskanal ist es dabei völlig ausreichend, wenn die Leckageöffnungen zumindest überwiegend in einer vom Kraftstoffstrahl benetzten Hälfte der ersten Drosseleinrichtung angeordnet sind.

Zur Steuerung der Einlassströmung in den Zylinder ist im Sammelkanal eine vorzugsweise durch eine Klappe gebildete zweite Drosseleinrichtung stromaufwärts der Mündung der Kraftstoffeinspritzeinrichtung angeordnet.

Um bei geschlossener erster Drosseleinrichtung die Strömungsverluste so klein wie möglich zu halten, ist es vorteilhaft, wenn der Querschnitt der Drosselklappe größer ist als der Querschnitt des zweiten Einlasskanals. Besonders vorteilhaft ist es dabei, wenn die erste Drosseleinrichtung durch eine Klappe gebildet ist und die Drehachse der ersten Drosseleinrichtung stromaufwärts der Verzweigung angeordnet ist.

Bei der auf die Leckageöffnungen der ersten Drosseleinrichtung gerichteten Kraftstoffeinspritzung durch die geschlossene Drosselklappe hindurch kann ein Kraftstofffilm an der Oberfläche der ersten Drosseleinrichtung entstehen. Zur Entfernung des an der ersten Drosseleinrichtung anhaftenden Kraftstofffilmes ist es besonders günstig, wenn die erste Drosseleinrichtung eine Abrisskante aufweist, welche im geschlossenen Zustand der Drosselklappe in den ersten Einlasskanal hineinragt. Der Kraftstofffilm wird somit durch die entlang der Klappenoberfläche strömende Einassströmung mitgerissen und gelangt über den ersten Einlasskanal in den Zylinder.

Um ein neutrales Drehverhalten der ersten Steuereinrichtung zu erreichen, ist es günstig, wenn die Klappenbereiche der ersten Drosseleinrichtung beidseits der Drehachse widerstandsgleich ausgeführt sind.

Eine einfache Steuerung der Einlassströmung wird möglich, wenn die erste und die zweite Drosseleinrichtung in zumindest einem Betriebsbereich aneinander gekoppelt sind.

In einer besonders bevorzugten montage- und wartungsfreundlichen Ausführungsvariante der Erfindung ist vorgesehen, dass die erste und die zweite Drosseleinrichtung und vorzugsweise auch die Kraftstoffeinspritzeinrichtung in einem gemeinsamen Drosselklappenstutzen angeordnet sind.

Die Erfindung wird im Folgenden anhand der Figuren näher erläutert. Es zeigen
- Fig. 1: eine Einlasskanalanordnung der erfindungsgemäßen Brennkraftmaschine,
- Fig. 2: die Einlasskanalanordnung in einem Schnitt gemäß der Linie II-II in Fig. 1 und
- Fig. 3: die Brennkraftmaschine in einem Schnitt gemäß der Linie III-III in Fig. 1.

Die Brennkraftmaschine weist pro Zylinder 1 einen ersten Einlasskanal 2 und einen zweiten Einlasskanal 3 auf, welche jeweils zu einem in einen Brennraum 5 mündenden Einlassventil 4 führen. Auf der bezüglich der Einlassventile 4 gegenüberliegenden Seite des Zylinders 1 sind Auslassventile 6 angedeutet. Zentral im Zylinder 1 ist eine Zündkerze 7 angeordnet.

Der erste Eilnasskanal 2 ist als Tangentialkanal und der zweite Einlasskanal 3 als Neutralkanal ausgeführt. Beide Einlasskanäle 2, 3 gehen von einem gemeinsamen Sammelkanal 8 aus. Ab dem Bereich einer Verzweigung 9 sind die beiden Einlasskanäle 2, 3 durch eine Kanaltrennwand 10 voneinander getrennt.

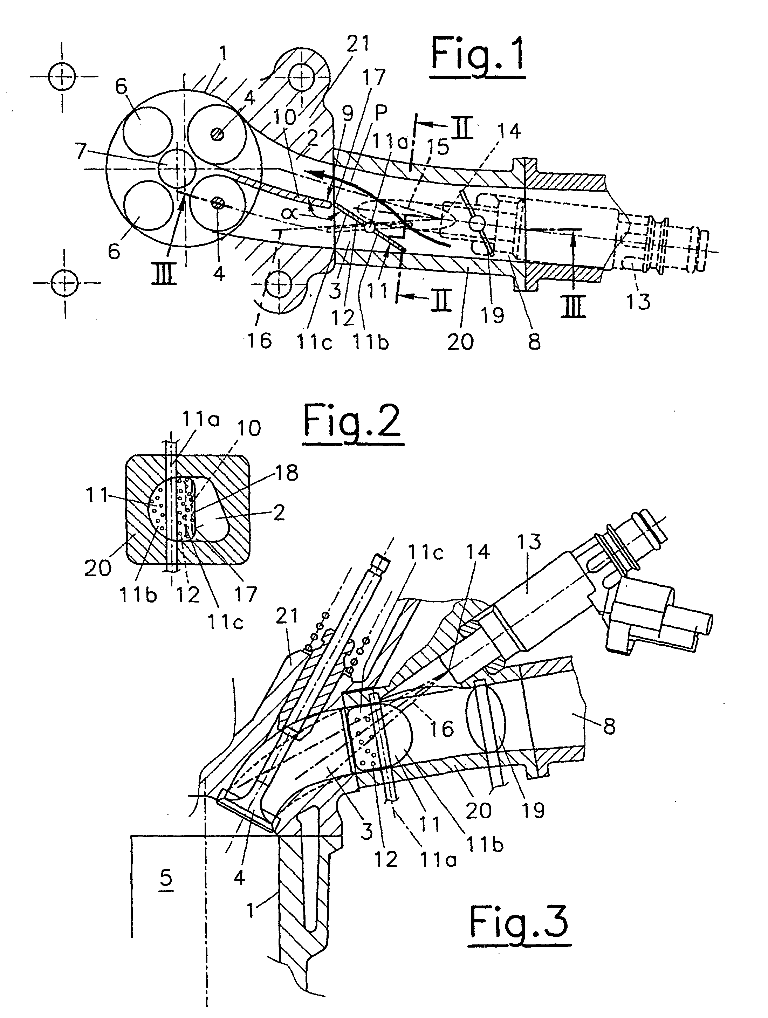

Zur Steuerung der Frischgasströmung ist im Strömungsweg zum zweiten Einlasskanal 3 eine durch eine Klappe gebildete Drosseleinrichtung 11 angeordnet, welche zwischen einer Öffnungsstellung und einer Schließstellung verstellt werden kann. Die Öffnungsstellung ist in Fig. 1 mit strichlierten Linien angedeutet.

Um ein neutrales Drehverhalten zu erreichen, weisen die Klappenbereiche 11b, 11c beidseits der Drehachse 11a den gleichen Luftwiderstand bezüglich der Einlassströmung auf.

Die erste Drosseleinrichtung 11 weist zumindest in der der Trennwand 10 zugewandten Hälfte mehrere durch Bohrungen gebildete Leckageöffnungen 12 mit vordefiniertem Querschnitt auf, um in der in Fig. 1 mit vollen Linien eingezeichneten Schließstellung einen genau definierten Leckagestrom durch den zweiten Einlasskanal 3 zu ermöglichen. Stromaufwärts der ersten Drosseleinrichtung 11 mündet in den Sammelkanal 8 eine Kraftstoffeinspritzeinrichtung 13 ein, deren Mündung mit 14 bezeichnet ist. Über die Kraftstoffeinspritzeinrichtung 13 wird Kraftstoff in beide Einlasskanäle 2, 3 eingespritzt. Die Kraftstoffstrahlen des ersten und zweiten Einlasskanals 2, 3 sind mit Bezugszeichen 15, 16 bezeichnet. Im geschlossenen Zustand der ersten Drosseleinrichtung 11 sind die Kraftstoffstrahlen 16 für den zweiten Einlasskanal 3 auf die Leckageöffnungen 12 gerichtet, so dass der Kraftstoff durch die geschlossene erste Drosseleinrichtung 11 hindurch in den zweiten Einlasskanal 3 eingespritzt werden kann.

Die erste Drosseleinrichtung 11 ist größer ausgeführt als der Querschnitt des zweiten Einlasskanals 3. Die Drehachse 11a der ersten Drosseleinrichtung 11 ist stromaufwärts der Verzweigung 9 angeordnet, so dass die erste Drosseleinrichtung 11 in der Schließstellung mit der Kanaltrennwand 10 einen stumpfen Winkel α > 90° einschließt. Dies erlaubt eine verlustarme Umleitung der Frischgasströmung in den ersten Einlasskanal 2, wie durch den Pfeil P in Fig. 1 angedeutet ist.

Durch die Kraftstoffeinspritzung durch die Leckageöffnungen 12 kann es zu einer Kraftstofffilmbildung auf der Oberfläche der ersten Drosseleinrichtung 11 kommen. Um den Kraftstoff der Frischgasströmung zuzuführen, weist die erste Drosseleinrichtung 11 eine in der Schließstellung in den ersten Einlasskanal 2 leicht hineinragende Abrisskante 17 auf, an welcher sich die Kraftstofftröpfchen lösen und in die Frischgasströmung des ersten Einlasskanals 2 gelangen (Fig. 2). Eine Wandfilmbildung an der Kanaltrennwand 10 wird somit vermieden. Der überstehende Teil der ersten Drosseleinrichtung 11 ist mit dem Bezugszeichen 18 bezeichnet.

Stromaufwärts der Mündung 14 der Kraftstoffeinspritzeinrichtung 13 ist eine durch eine Klappe gebildete zweite Drosseleinrichtung 19 angeordnet, mit welcher der Gesamtzufluss an Frischgas entsprechend der Motorlast gesteuert werden kann.

Die erste Drosseleinrichtung 11 und die zweite Drosseleinrichtung 19 sind in einem gemeinsamen, am Zylinderkopf 21 angeflanschten und die Kraftstoffeinspritzeinrichtung 13 aufnehmenden Drosselklappenstutzen 20 angeordnet.

## Patentansprüche

1. Brennkraftmaschine mit zumindest zwei Einlassventilen (4) pro Zylinder (1), mit mindestens zwei zu den Einlassventilen (4) führenden Einlasskanälen (2, 3), von welchen ein erster Einlasskanal (2) vorzugsweise als ungedrosselter Tangentialkanal ausgeführt ist und der Durchfluss durch einen zweiten Einlasskanal (3) mittels einer in Abhängigkeit von zumindest einem Motorparameter betätigbaren ersten Drosseleinrichtung (11) steuerbar ist, mit zumindest einer Kraftstoff in zumindest zwei Einlasskanäle (2, 3) einspritzenden Kraftstoffeinspritzeinrichtung (13) pro Zylinder (1), wobei im geschlossenen Zustand der ersten Drosseleinrichtung (11) mittels zumindest einer Leckageöffnung (12) der ersten Drosseleinrichtung (11) ein definierter Mindestdurchfluss durch den zweiten Einlasskanal (3) erzeugbar ist, und wobei die erste Drosseleinrichtung (11) stromabwärts der Kraftstoffeinspritzeinrichtung (13) angeordnet ist und mindestens eine Leckageöffnung (12) im Auftreffbereich mindestens eines Einspritzstrahles (16) angeordnet ist, und wobei die erste Drosseleinrichtung (11) in geschlossenem Zustand mit einer Kanaltrennwand (10) zwischen dem ersten und dem zweiten Einlasskanal (2, 3) einen stumpfen Winkel (α) größer als 90° einschließt, so dass die Frischgasströmung zum ersten Einlasskanal (2) umgeleitet wird, **dadurch gekennzeichnet, dass** der erste und der zweite Einlasskanal (2, 3) von einem gemeinsamen Sammelkanal (8) ausgehen und dass die erste Drosseleinrichtung (11) im Bereich der Verzweigung (9) der beiden Einlasskanäle (2, 3) aus dem Sammelkanal (8), vorzugsweise unmittelbar stromaufwärts der Verzweigung (9) angeordnet ist.

2. Brennkraftmaschine nach Anspruch 1, **dadurch gekennzeichnet, dass** die Leckageöffnung (12) durch mindestens eine Bohrung in der ersten Drosseleinrichtung (11) gebildet ist.

3. Brennkraftmaschine nach Anspruch 1 oder 2, **dadurch gekennzeichnet, dass** die Leckageöffnungen (12) zumindest überwiegend in einer vom Einspritzstrahl (16) benetzten Hälfte der ersten Drosseleinrichtung (11) angeordnet sind.

4. Brennkraftmaschine nach einem der Ansprüche 1 bis 3, **dadurch gekennzeichnet, dass** der Querschnitt der ersten Drosseleinrichtung (11) größer ist als der Querschnitt des zweiten Einlasskanals (3).

5. Brennkraftmaschine nach einem der Ansprüche 1 bis 4, **dadurch gekennzeichnet, dass** die erste Drosseleinrichtung (11) eine Abrisskante (17) aufweist, welche im geschlossenen Zustand der ersten Drosseleinrichtung (11) in den ersten Einlasskanal (2) hineinragt.

6. Brennkraftmaschine nach einem der Ansprüche 1 bis 5, wobei die erste Drosseleinrichtung (11) durch eine Klappe gebildet ist, **dadurch gekennzeichnet, dass** die Drehachse (11a) der ersten Drosseleinrichtung (11) stromaufwärts der Verzweigung (9) angeordnet ist.

7. Brennkraftmaschine nach einem der Ansprüche 4 bis 6, **dadurch gekennzeichnet, dass** im Sammelkanal (8) stromaufwärts der Kraftstoffeinspritzeinrichtung (13) eine vorzugsweise durch eine Klappe gebildete zweite Drosseleinrichtung (19) angeordnet ist.

8. Brennkraftmaschine nach einem der Anspruch 6 oder 7, **dadurch gekennzeichnet, dass** die Klappenbereiche (11b, 11c) der ersten Drosseleinrichtung (11) beidseits der Drehachse (11a) widerstandsgleich ausgeführt sind.

9. Brennkraftmaschine nach einem der Ansprüche 1 bis 8, **dadurch gekennzeichnet, dass** die erste und die zweite Drosseleinrichtung (11, 19) gekoppelt sind.

10. Brennkraftmaschine nach einem der Ansprüche 1 bis 9, **dadurch gekennzeichnet, dass** die erste und die zweite Drosseleinrichtung (11, 19) und vorzugsweise auch die Kraftstoffeinspritzeinrichtung in einem gemeinsamen Drosselklappenstutzen (20) angeordnet sind.

## Claims

1. Internal combustion engine with at least two intake valves (4) per cylinder (1), and at least two intake ports (2, 3) leading to the intake valves (4), a first intake port (2) preferably being configured as unthrottled tangential passage and the flow through a second intake port (3) being controlled by means of a first throttle element (11) actuated in dependence of at least one engine parameter, and at least one fuel injector (13) per cylinder (1) injecting fuel into at least two intake ports (2, 3), wherein in the closed position of the first throttle element (11) at least one leakage aperture (12) will permit a defined minimum flow through the second intake port (3), and wherein the first throttle element (11) is positioned downstream of the fuel injector (13) and at least one leakage aperture (12) is provided in the area impinged on by at least one injection jet (16), and wherein the first throttle element (11) in its closed position forms an obtuse angle (α) of greater than 90° with a partition wall (10) between the first and second intake port (2, 3), so that the intake flow will be diverted towards the first intake port (2), **characterized in that** the first and second intake ports (2, 3) depart from a common manifold (8), and that the first throttle element (11) is located in the branching area (9) where the two intake ports (2, 3) branch off from the manifold (8), and preferably immediately upstream of the branching area (9).

2. Internal combustion engine according to claim 1, **characterized in that** the leakage aperture (12) is formed by at least one bore in the first throttle element (11).

3. Internal combustion engine according to claim 1 or 2, **characterized in that** the leakage apertures (12) are positioned, at least predominantly, in the half of the first throttle element (11) wetted by the fuel jet (16).

4. Internal combustion engine according to any of claims 1 to 3, **characterized in that** the cross-section of the first throttle element (11) exceeds the cross-section of the second intake port (3).

5. Internal combustion engine according to any of claims 1 to 4, **characterized in that** the first throttle element (11) is provided with a separator edge (17) projecting into the first intake port (2) in the closed position of the first throttle element (11).

6. Internal combustion engine according to any of claims 1 to 5, wherein the first throttle element (11) is configured as a flap, **characterized in that** the rotation axis (11a) of the first throttle element (11) is located upstream of the branching area (9).

7. Internal combustion engine according to any of claims 4 to 6, **characterized in that** the manifold (8) is provided with a second throttle element (19), preferably configured as a flap, which is positioned upstream of the fuel injector (13).

8. Internal combustion engine according to any of claims 6 or 7, **characterized in that** the flap areas (11b,11c) of the first throttle element (11) on either side of the rotation axis (11a) are designed so as to have the same air resistance.

9. Internal combustion engine according to any of claims 1 to 8, **characterized in that** the first and second throttle element (11, 19) are coupled.

10. Internal combustion engine according to any of claims 1 to 9, **characterized in that** the first and second throttle element (11, 19) and preferably also the fuel injector (13) are provided in a common adapter piece (20).

## Revendications

1. Moteur à combustion interne, comprenant au moins deux soupapes d'admission (4) par cylindre (1), avec au moins deux canaux d'admission (2, 3) menant aux soupapes d'admission (4), dont un premier canal d'admission (2) est réalisé, de préférence, sous la forme de canal tangentiel non étranglé, et le débit passant par un deuxième canal d'admission (3) est susceptible d'être commandé à l'aide d'un premier dispositif d'étranglement (11) actionnable en fonction d'au moins un paramètre moteur, avec au moins, par cylindre (1), un dispositif d'injection de carburant (13), injectant du carburant en au moins deux canaux d'admission (2,3), sachant que, à l'état fermé du premier dispositif d'étranglement (11), à l'aide d'au moins une ouverture de fuite (12) du premier dispositif d'étranglement (11) peut être produit un débit minimal défini à travers le deuxième canal d'admission (3), et où le premier dispositif d'étranglement (11) est disposé en aval du dispositif d'injection de carburant (13), et au moins une ouverture de fuite (12) est ménagée dans la zone d'arrivée d'au moins un jet d'injection (16), et où le premier dispositif d'étranglement (11), à l'état fermé, fait, avec une paroi de séparation de canal (10), se trouvant entre le premier et le deuxième canal d'admission (2, 3), un angle α obtus supérieur à 90°, de manière que l'écoulement de gaz neuf, allant au premier canal d'admission (2), soit dévié, **caractérisé en ce que** le premier et le deuxième canal d'admission (2, 3) partent d'un canal collecteur (8) commun, et **en ce que** le premier dispositif d'étranglement (11) est disposé dans la zone de la ramification (9) des deux canaux d'admission (2, 3), partant du canal collecteur (8), de préférence directement en amont de la ramification (9).

2. Moteur à combustion interne selon la revendication 1, **caractérisé en ce que** l'ouverture de fuite (12) est formée par au moins un perçage, ménagé dans le premier dispositif d'étranglement (11).

3. Moteur à combustion interne selon la revendication 1 ou 2, **caractérisé en ce que** les ouvertures de fuite (12) sont disposées au moins majoritairement dans une moitié, mouillée par le jet d'injection (16), du premier dispositif d'étranglement (11).

4. Moteur à combustion interne selon l'une des revendications 1 à 3, **caractérisé en ce que** la section transversale du premier dispositif d'étranglement (11) est plus grande que la section transversale du deuxième canal d'admission (3).

5. Moteur à combustion interne selon l'une des revendications 1 à 4, **caractérisé en ce que** le premier dispositif d'étranglement (11) présente une arête de décollement (17), pénétrant dans le premier canal d'admission (2) lorsque le premier dispositif d'étranglement (11) est à l'état fermé.

6. Moteur à combustion interne selon l'une des revendications 1 à 5, le premier dispositif d'étranglement (11) étant formé par un volet, **caractérisé en ce que** l'axe de rotation (11a) du premier dispositif d'étranglement (11) est disposé en amont de la ramification (9).

7. Moteur à combustion interne selon l'une des revendications 4 à 6, **caractérisé en ce que**, dans le canal collecteur (8), en amont du dispositif d'injection en carburant (13), est disposé un deuxième dispositif d'étranglement (19), de préférence formé par un volet.

8. Moteur à combustion interne selon l'une des revendications 6 ou 7, **caractérisé en ce que** les zones de volet (11b, 11c) du premier dispositif d'étranglement (11) sont réalisés avec une résistance identique, de part et d'autre de l'axe de rotation (11a) .

9. Moteur à combustion interne selon l'une des revendications 1 à 8, **caractérisé en ce que** le premier et le deuxième dispositifs d'étranglement (11, 19) sont couplés.

10. Moteur à combustion interne selon l'une des revendications 1 à 9, **caractérisé en ce que** le premier et le deuxième dispositifs d'étranglement (11, 19), et, de préférence, également le dispositif d'injection de carburant, sont disposés dans une tubulure de volet d'étranglement (20) commune.
